Europäisches Patentamt

European Patent Office

Office européen des brevets

(11) Veröffentlichungsnummer: **0 048 860**
**B1**

(19)

## (12) EUROPÄISCHE PATENTSCHRIFT

(45) Veröffentlichungstag der Patentschrift:
**27.12.85**

(21) Anmeldenummer: **81107149.7**

(22) Anmeldetag: **10.09.81**

(51) Int. Cl.⁴: **H 04 Q 11/04,** H 04 L 11/00

### (54) Universelles Digitalnetz zur paketvermittelten Informationsübertragung.

(30) Priorität: **29.09.80 DE 3036740**

(43) Veröffentlichungstag der Anmeldung:
**07.04.82 Patentblatt 82/14**

(45) Bekanntmachung des Hinweises auf die Patenterteilung:
**27.12.85 Patentblatt 85/52**

(84) Benannte Vertragsstaaten:
**BE FR GB IT NL**

(56) Entgegenhaltungen:
**DE - A - 2 441 099**
**DE - A - 2 522 759**
**FR - A - 2 362 546**
**US - A - 3 749 845**

**IEEE TRANSACTIONS ON COMMUNICATIONS, Part I,**
**Band COM-28, Nr. 9, September 1980, Seiten 1655-1662,**
**New York, U.S.A., O.A. MOWAFI et al.: "Integrated**
**voice/data packet switching techniques for future**
**military networks"**
**COLLOQUE INTERNATIONAL DE COMMUTATION**
**INTERNATIONAL SWITCHING SYMPOSIUM, 7.-11. Mai**
**1979, Seiten 757-764, Paris, FR. Y. IKEDA et al.:**
**"Système de commutation de circuits virtuels: un**
**nouveau concept pour les réseaux numériques à service**
**intégrés"**

(73) Patentinhaber: **Siemens Aktiengesellschaft, Berlin und**
**München Wittelsbacherplatz 2, D-8000 München 2 (DE)**

(72) Erfinder: **Gefrörer, Stanislaus, Dipl.-Math., Flurweg 34,**
**D-8028 Taufkirchen (DE)**
Erfinder: **Vollmeyer, Werner, Dr., Wertheimer**
**Strasse 112, D-8000 München 60 (DE)**

**Beschreibung**

Die vorliegende Erfindung betrifft ein universelles Digitalnetz zur paketvermittelten Informationsübertragung, bei dem eine von einem Ursprungsendgerät in eine Ursprungsvermittlungsstelle eingegebene Wählinformation dazu verwendet wird, eine von der Ursprungsvermittlungsstelle ausgehende, im Bedarfsfalle über eine oder mehrere Durchgangsvermittlungsstellen verlaufende und bis zu einer Zielvermittlungsstelle, an die ein betreffendes Zielendgerät angeschlossen ist, reichende virtuelle Verbindung aufzubauen, daß eine zu übertragende Information in Informationsabschnitte mit variablen, von dem Übertragungsverfahren und dem Vermittlungsverfahren nicht begrenzten Längen eingeteilt wird.

Unter der Voraussetzung, daß Sprachsignale in einem Fernsprechsystem digitalisiert werden, kann eine Übertragung solcher digitalisierter Sprachsignale einer digitalen Datenübertragung gleichgesetzt werden.

In bisher bekannten Netzen für digitale Sprachübertragung werden in aller Regel — wie auch in Analognetzen — Verbindungen zwischen jeweils zwei Teilnehmern für die gesamte Gesprächsdauer zusammengeschaltet. Mit zunehmender Verdichtung solcher Netze bzw. mit zunehmenden Teilnehmerzahlen wachsen die Schwierigkeiten bezüglich der Anzahl der verfügbaren Kanäle.

Es ist bekannt, daß eine Sprechverbindung für ein einzelnes Gespräch in aller Regel über die Zeit nur zu einem geringen Teil ausgenutzt wird, da zum einen die Gesprächspartner jeweils abwechselnd sprechen und zum anderen auch der Redefluß des einzelnen Gesprächspartners nicht kontinuierlich verläuft. Es entstehen jeweils auch in einem Kurzmonolog Sprechpausen, während derer die betreffende Sprechverbindung tatsächlich nicht benötigt würde. Dieser Umstand wird bekanntlich durch Verfahren zur Einsparung von Kanalkapazität, insbesondere in kostenintensiven Verbindungsabschnitten, beispielsweise Transatlantikkabeln, Satellitenstrecken o. ä., vorteilhaft ausgenutzt. Ein diesbezüglich bekanntes Verfahren stellt das TASI (time assigned speech interpolation)-Verfahren dar.

Bei der Sprachinterpolation, die bei diesem bekannten TASI-Verfahren vorgenommen wird, wird jeweils ein Kanal für eine betreffende Sprechverbindung durchgeschaltet, wenn in der jeweils betreffenden Richtung tatsächlich gesprochen wird. In allen anderen Zeitabschnitten steht die Kanalkapazität weiteren individuellen Sprechverbindungen zur Verfügung.

Es ist ohne weiteres erkennbar, daß mittels eines solchen Verfahrens der Umstand, nachdem eine herkömmliche Sprechverbindung nach den erläuterten Gegebenheiten während eines Gespräches nur zeitabschnittsweise benötigt wird, vorteilhaft für eine bessere Ausnutzung der Kanäle verwendet werden kann. Mit der Sprachinterpolation kann die vorhandene Übertragungskapazität eines Leitungsbündels sehr viel besser ausgenutzt werden. Es ist z. B. möglich, ein Bündel von 35 oder mehr Leitungen mit etwa doppelt so vielen Gesprächen, als herkömmlicherweise möglich ist, zu belasten.

Die bekannten Verfahren der Sprachinterpolation werden grundsätzlich abschnittsweise, beispielsweise zwischen zwei Vermittlungsstellen eingesetzt. Jede der beiden Vermittlungsstellen hat dabei ein Bündel von gehenden Kanälen zur Verfügung, aus dem sie die Kanäle den Nachrichtensendern nach Bedarf zuteilt. In einem vollständigen Fernsprechnetz liegt dagegen in aller Regel ein sternförmiges oder sogar ein vermaschtes Netz vor. Eine Verbindung besteht in aller Regel aus mehreren Abschnitten. Wegen der erforderlichen Zwischenspeicherzeit ergäbe sich jedoch bei mehreren Abschnitten (bis zu 12) eine viel zu große Laufzeit. Dies würde somit zu keiner realistischen Lösung führen.

Bekannt sind ferner Netze mit einer sog. Paketvermittlung. Diese Netze haben für die Sprachübertragung folgende Nachteile:

— Die abschnittsweise Übertragung der »Pakete« erfordert in jedem Netzknoten die Zwischenspeicherung eines ganzen Paketes, weil durch Sicherungsverfahren abschnittsweise die richtige Übertragung des Paketes sicherzustellen ist. Es ist jedoch darauf zu achten, daß die Laufzeitobergrenze von Teilnehmer zu Teilnehmer, die mit 400 ms festgelegt ist, nicht überschritten wird. Zieht man in Betracht, daß ein über eine Erde-Satelliten-Strecke führender Abschnitt bereits 300 ms Laufzeit beansprucht, so verbleiben für die restlichen Abschnitte nur noch ca. 100 ms. Dieser Umstand ist insbesondere für weltweite Sprechverbindungen von besonderer Bedeutung. In Netzen mit Paketvermittlung ist daher die Laufzeitgrenze in aller Regel nicht einzuhalten.

— Ferner ist die Datenübertragung in paketvermittelten Netzen in jedem Leitungsabschnitt von dem Verkehr abhängig, der außer der Sprachübertragung noch fließt. Die am Anfang einer Leitung zur Übertragung anstehenden Pakete können nur nacheinander übertragen werden. Ist momentan ein großer Verkehr zu bewältigen, so müssen die Pakete länger warten, als wenn momentan wenig Verkehr zu bewältigen ist. Die Laufzeit der Pakete ist daher von Paket zu Paket verschieden. Durch die dadurch verursachten Laufzeitsprünge ergeben sich zusätzliche Geräusche und Unregelmäßigkeiten in der Sprachwiedergabe.

Aus der Druckschrift IEEE TRANSACTIONS ON COMMUNICATIONS, Band COM-28, Nr. 9, September 1980, S. 1655 bis 1662, ist ein universelles Digitalnetz zur Sprach- und Datenübertragung mittels paketvermittelter Informationsübertragung bekannt, bei dem eine von einem Ursprungsteilnehmer in eine Ursprungsvermittlungsstelle (Source) eingegebene Wählinformation (Trailblazer packet) dazu verwendet wird, eine von der Ursprungsvermittlungsstelle ausgehende bis zu einer Zielvermittlungsstelle (Destination node), an die ein betreffender Zielteilnehmer angeschlossen ist, reichende virtuelle Verbindung aufzubauen. Bei diesem bekannten Fernsprechvermittlungsnetz ist unter anderem vorgesehen, daß eine zu übertragende Information in Abschnitte eingeteilt (packetized) und jeweils ein Abschnitt über die zwischen zwei Vermittlungsstellen aufgebaute reale Teilverbindung übertragen wird und daß die virtuelle Verbindung nach Beendigung des Gesprächs abgebaut wird.

Aus der US-A-3 749 845 ist ein Datenübertragungssystem bekannt, das die während der Übertragungspausen ungenutzten Verbindungen ausnutzt, indem zunächst von einer Ursprungsvermittlungsstelle ausgehende, im Bedarfsfalle über eine oder mehrere Durchgangsvermittlungsstellen verlaufende virtuelle Verbindungen zwischen einem Digitalgerät und einem anderen Ziel-Digitalgerät aufgebaut werden und die Digitalinformation dann über reale Verbindungen übertragen wird. Dabei ist die Digitalinformation in Informationsblöcke (packets) mit einer vorangestellten Zielkennungsfolge, die Angaben über jeweils zu durchlaufende virtuelle Teilverbindungen enthält, und mit einer an das Ende der Informationsblöcke gestellten und deren Ende signalisierenden Endekennung versehen.

Durch die Druckschrift COLLOQUE INTERNATIONAL DE COMMUTATION, Paris, 7. bis 11. Mai 1979, S. 757 bis 764, ist es bei einem Fernsprechvermittlungsnetz zur digitalen Sprachübertragung mit virtuellem Verbindungsaufbau bekannt, einen Sprachendetektor zur Erkennung der Sprechpausen vorzusehen und eine Phrasen-Rasterung zu 8 ms entsprechend 64 Oktetts vorzusehen.

Der vorliegenden Erfindung liegt die Aufgabe zugrunde, ein universelles Digitalnetz zur Sprach- und Datenübertragung zu schaffen, bei dem digitale nicht sprachbezogene Daten und/ oder Sprache gleichartig übertragen werden, wobei die Nachteile der Netze mit Paketvermittlung vermieden werden, und bei dem es mit einfachen Mitteln bzw. Maßnahmen erreicht werden kann, dennoch die Vorteile der Sprachinterpolation auch dort zu nutzen, wo Verbindungen weitgespannt und in beliebigen Richtungen, verlaufend über verschiedene Vermittlungsstellen hinweg, Teilnehmer miteinander verbinden.

Die der Erfindung zugrundeliegende Aufgabe wird bei einem universellen Digitalnetz zur paketvermittelten Informationsübertragung der eingangs genannten Art bzw. nach dem Oberbegriff der Patentansprüche 1 oder 3, durch die in dem jeweiligen kennzeichnenden Teil der Patentansprüche 1 bzw. 3 angegebenen Merkmale gelöst.

Die Anwendung des erfindungsgemäßen Prinzips bei einem Fernsprechvermittlungsnetz oder bei einem Fernsprech-Mobilfunksystem oder bei einem universellen Mobilfunk-Digitalnetz ist Gegenstand der prioritätsgleichen Europäischen Patentanmeldungen 0 048 853 bzw. 0 048 854 bzw. 0 048 861.

Die Erfindung bietet den Vorteil, daß das an sich bekannte Verfahren der Sprachinterpolation in beliebig gestalteten für die Übertragung von digitalen Sprachsignalen vorgesehenen Fernsprechnetzen zur Einsparung von Kanalkapazität verwendet werden kann, daß durch diese Art von Übertragungs- und Vermittlungsverfahren die Sprachqualität nicht durch unterschiedliche Laufzeiten der Sprachabschnitte beeinträchtigt wird und daß ebenfalls nicht sprachbezogene Daten mit demselben Verfahren unter Einsparung von Kanalkapazität übertragen werden können.

Vorteilhafte Weiterbildungen der Erfindung sind durch die in den Unteransprüchen angegebenen Merkmale gekennzeichnet.

Im folgenden wird die Erfindung anhand mehrerer, Ausführungsbeispiele für die Erfindung betreffender Figuren im einzelnen erläutert.

Fig. 1 zeigt schematisch den Aufbau eines universellen Digitalnetzes gemäß der vorliegenden Erfindung.

Fig. 2 zeigt schematisch den Aufbau einer ersten Aufbaudatenfolge D'.

Fig. 3 zeigt schematisch den Aufbau einer zweiten Aufbaudatenfolge D''.

Fig. 4 zeigt schematisch den Aufbau einer Sprachinformation S mit einzelnen Phrasen P mit jeweils einer vorangestellten Zielkennungsfolge Z und einer anschließenden Endekennung E.

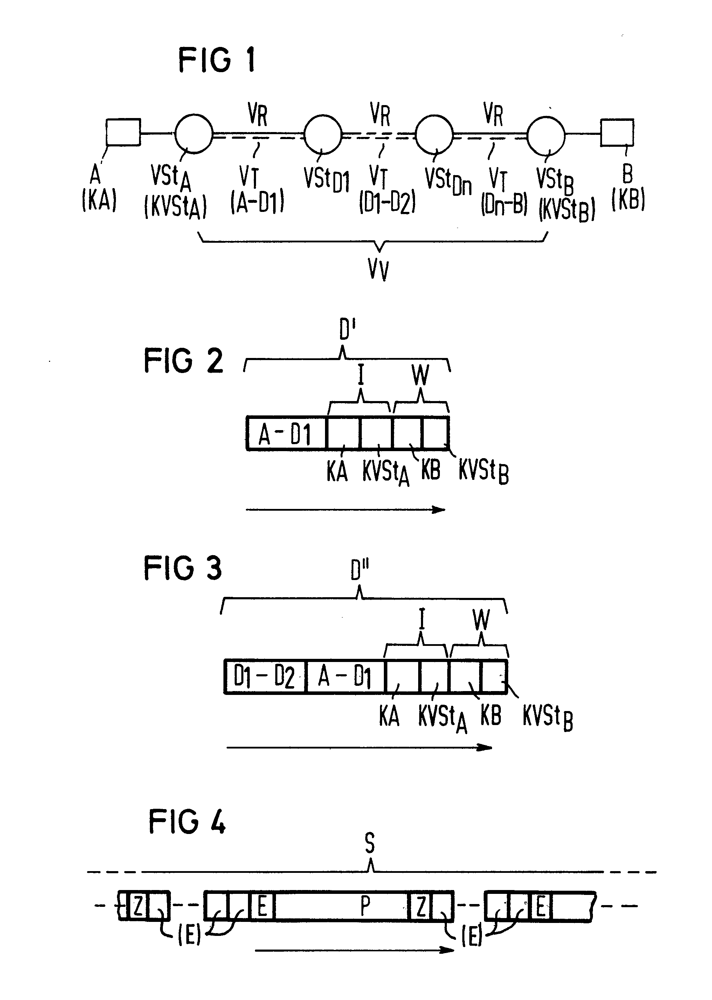

Wie bereits erläutert, zeigt Fig. 1 schematisch den Aufbau eines universellen Digitalnetzes gemäß der vorliegenden Erfindung. Ein »rufendes« Endgerät, nämlich das Ursprungsendgerät A, teilt seiner Vermittlungsstelle, nämlich der Ursprungsvermittlungsstelle VSt$_A$, mittels eines Rufaufbaupaketes, das beispielsweise durch das an sich bekannte High-Data-Link-Control-Verfahren HDLC gesichert ist und im folgenden als Verbindungsbeginn-Frame oder Beginn-Frame (Frame hier in der Bedeutung »Nutzinformation tragender HDCL-Block) bezeichnet wird, in einem Kanal mit einer Datenübertragungsgeschwindigkeit von 64 kbit/s die Nummer des gewünschten Endgerätes in Form einer Wählinformation W, die eine Zielvermittlungsstellen-Kennung KVST$_B$ und eine Zielendgerät-Kennung KB enthält, mit. Zugleich oder vorher könnte — falls erforderlich — in einem gesonderten Teilnehmer-Signalkreis ein entsprechender Informationsaustausch stattfinden, um sicherzustellen, daß der Teilnehmerwunsch in dem 64-kbit/s-Kreis von der Vermittlung empfangen und quittiert wird.

Die Vermittlung schaltet nicht — wie bei Durchschaltevermittlungen üblich — für die Verbindung eine Leitung, sondern sucht ein Leitungsbündel in die gewünschte Richtung aus, das genügend freie Kapazität aufweist, und meldet die virtuelle Verbindung mit einem speziell gekennzeichneten und gesicherten Verbindungsbeginn-Frame der nächsten Vermittlungsstelle, beispielsweise der ersten Durchgangsvermittlungsstelle $VSt_{D1}$. (Für die Kennzeichnung kann beispielsweise auch eine eigene Leitung verwendet werden.) Dieser Beginn-Frame enthält die Kennungen für den gerufenen und für den rufenden Teilnehmer, nämlich eine Identifikationsinformation I mit der Ursprungsvermittlungsstellen-Kennung $KVSt_A$ und der Ursprungsendgerät-Kennung KA. Außerdem enthält er ein Oktett zur lokalen, d. h. nur in dieser Vermittlungsstelle verständlichen Kennzeichnung des abgehenden Bündels. Bei dieser Kennzeichnung werden die beiden Kombinationen 00000000 und 11111111 nicht verwendet.

Die lokale Kennzeichnung eines Bündels, nämlich die Leitungsbündel-Kennung $A-D_1$, entspricht der lokalen Adressierung einer Richtung und dient nach Einrichtung der virtuellen Verbindung der Wegelenkung.

Die nächste Vermittlungsstelle, nämlich $VSt_{D1}$, »merkt« sich das Bündel, aus dem der Beginn-Frame kam, liest die Nummer der Zielvermittlungsstelle $VSt_B$ des Zielendgerätes B, sucht das entsprechende Bündel, fügt dem Beginn-Frame wiederum zur lokalen Kennzeichnung des ankommenden und des abgehenden Bündels je ein Oktett an und sendet den Beginn-Frame auf eine Leitung des ausgesuchten abgehenden Bündels.

Die nachfolgenden Durchgangsvermittlungsstellen $VSt_{D2} \ldots VSt_{Dn}$ verfahren ebenso.

Die Zielvermittlungsstelle $VSt_B$ des gerufenen Teilnehmers, nämlich des Zielendgerätes B, empfängt schließlich den Beginn-Frame, der die Oktetts enthält, mit denen die durchlaufenen Vermittlungsstellen die zu benutzenden Bündel nacheinander bezeichnet haben, sowie die Nummern des rufenden und des gerufenen Teilnehmers einschließlich der Nummer der zugehörigen Endvermittlungsstellen. Die Vermittlungsstelle des gerufenen Teilnehmers sendet den Beginn-Frame zur Vermittlungsstelle des rufenden Teilnehmers als Quittung gekennzeichnet zurück.

Beginn-Frame und Quittungs-Frame haben dann alle Durchgangsvermittlungsstellen durchlaufen. Mit Hilfe der Teilnehmernummern können dort diese beiden Frames identifiziert werden. Die Information des Quittungs-Frame kann abgespeichert werden. Die Durchgangsvermittlungsstellen können somit die virtuellen Verbindungen überwachen.

Ferner ist nun die virtuelle Verbindung auch den beiden Endvermittlungsstellen bekannt. Der gerufene Teilnehmer wird gerufen, der rufende Teilnehmer bekommt die Rufquittung. Nachdem sich der gerufene Teilnehmer gemeldet hat, wird auf der Teilnehmerleitung die Information digital übertragen.

Während bei dem bis hier beschriebenen Verfahren jedes Bündel durch zwei verschiedene Oktetts von den beiden angrenzenden Vermittlungsstellen jeweils lokal und unabhängig bezeichnet wird und diese beiden Oktetts im Beginn- und Quittungs-Frame auch übertragen werden müssen, kann alternativ auch mit nur einem Oktett je Bündel gearbeitet werden, das in einer Vermittlungsstelle dieses Bündel als abgehendes und in der nächsten Vermittlungsstelle als ankommendes kennzeichnet. Durch 8 bit können 256 Bündel in der Umgebung der Vermittlungsstelle bezeichnet werden. Werden die Kombinationen 11111111 und 00000000 ausgelassen, so verbleiben immer noch 254 Bündelkennzeichen. Andererseits gibt es in einem Land sicher erheblich mehr als 254 Bündel. Die Leitungsbündel-Kennungen werden daher mehrfach verwendet werden müssen. Durch eine Strategie — beispielsweise ähnlich der, die beim Mobilfunk in Kleinzonennetzen für die Frequenzen der Kanäle angewandt wird — ist sicherzustellen, daß Mehrdeutigkeiten vermieden werden.

Prinzipiell wäre es denkbar, in beiden Richtungen verschiedene Wege oder Bündel zu nutzen. Das hat aber den Nachteil, daß zumindest beim Aufbau der virtuellen Verbindung doppelt quittiert werden muß und daß die Überwachung einer Verbindung größere Zeitkonstanten erfordert, weil ggf. verhältnismäßig lange Information in nur einer Richtung übertragen werden kann.

Hat ein Bündel N Kreise, so darf eine Vermittlungsstelle höchstens 2 N virtuelle Verbindungen annehmen. Hierbei ist vorausgesetzt, daß das Bündel mindestens 35 Kreise aufweist. Hat es weniger als 35 Kreise, so ist ein Ausnutzungsfaktor kleiner als 2 zu wählen.

Die Leitungen eines Bündels müssen einheitliche Eigenschaften, insbesondere möglichst gleiche Laufzeiten aufweisen. Beispielsweise dürfen Pupin- und TF-Leitungen oder Satelliten- und Seekabelleitungen nicht gemischt werden, weil sonst während einer Informationsübertragung abrupt Laufzeitänderungen auftreten können, was bei einer Datenübertragung meist nicht stört, für eine Sprachübertragung jedoch eine Qualitätsminderung bedeutet.

Mit der Annahme des Rufes durch den gerufenen Teilnehmer beginnt der Übertragungszustand, was dem rufenden Teilnehmer gemeldet wird.

Wenn es sich bei der Informationsübertragung um eine Sprachübertragung handelt, wid der Sprach-Dialog von den beiden Teilnehmervermittlungsstellen in Phrasen P unterteilt. (Eine Phrase ist ein zusammenhängender Sprachabschnitt.) Ein an sich bekannter Sprachdetektor analysiert eine vom Teilnehmer kommende digitalisierte Sprachinformation S und erkennt den Beginn einer Phrase P. Das codierte Sprachsignal wird für $\leq 15$ ms zwischengespeichert und in dieser Zeit eine Zielkennungsfolge Z ausgesendet. Die Zielkennungsfolge Z besteht aus den Kennzeichen der abgehenden Bündel in den Vermittlungen, die die Phrase P durchlaufen soll (unterstellt man höchstens 13 Vermittlungen hintereinander, so ergeben sich $13 \times 8$ bit $= 104$ bit), sowie aus der Nummer des zu erreichenden (d. h. gerufenen bzw. rufenden) Teilnehmers bei den Endvermittlungsstellen.

Für die Nummer des Teilnehmers werden zwei Oktetts angesetzt, die Oktetts 00000000 und 11111111 jedoch nicht verwendet. Somit ergeben sich $254 \times 254 = 64516$ verschiedene Teilnehmernummern an der Zielvermittlungsstelle.

Fügt man am Beginn der Zielkennungsfolge Z noch ein Zielbeginnzeichen hinzu, ergeben sich für das Zielkriterium maximal $16 \times 8$ bit $= 128$ bit.

Vorteilhafterweise kann die Zielkennungsfolge gegen Fehler gesichert werden. Dafür wären dann noch 16 bit zusätzlich anzusetzen. Es kann jedoch in aller Regel davon ausgegangen werden, daß einerseits die Übertragungsfehlerhäufigkeit in einem digitalen Netz hinreichend klein ist und daß andererseits auch heute in einem analogen Netz gelegentlich Doppelverbindungen in Kauf genommen werden. Infolgedessen kann auf eine Beschreibung der Sicherung verzichtet werden.

Das Zielbeginnzeichen ist derart aufgebaut, daß es sich von dem Oktett 11111111 in mindestens 2 bit unterscheidet. Es gibt die Anzahl der noch vorhandenen Oktetts in der Zielkennungsfolge Z an und enthält ferner eine Dienstkennung.

Bei einer Übertragungsgeschwindigkeit von 64 kbit/s ergibt sich eine Aussendezeit für die Zielkennungsfolge Z von $\leq 2$ ms. Die o. a. Zwischenspeicherzeit von $\leq$ ms entsteht, weil zusätzlich zur Aussendezeit noch eine Karenzzeit erforderlich ist, in der sicher erkannt werden muß, daß es sich tatsächlich um ein Sprachsignal und nicht um einen einzelnen Knack handelt. Die Karenzzeit wird aber nur bei der ersten Vermittlungsstelle benötigt. Bei den weiteren Vermittlungsstellen braucht nur für etwa 0,5 ms zwischengespeichert zu werden.

Die Übertragung einer Phrase P auf einer Leitung wird dadurch abgeschlossen, daß bezogen auf einen Oktett-Takt des Netzes oktettweise in Kriterium übertragen wird, das die Ruhelage der Leitung anzeigt, z. B. die Kombination 11111111.

Das erste Oktett, das die erste Vermittlungsstelle als Beginn-Kennzeichen für eine Phrase P auf die (aus dem richtigen Bündel ausgewählte) Leitung zur zweiten Vermittlungsstelle sendet, ist das Zielbeginnzeichen und dann das Oktett, das das Bündel zur dritten Vermittlungsstelle kennzeichnet. Dann folgt das Oktett, daß das Bündel zur vierten Vermittlungsstelle kennzeichnet usw., bis alle Bündel bis zur letzten Vermittlungsstelle gekennzeichnet sind. Auf die letzte Leitungsbündel-Kennung, beispielsweise $D_1$-B, folgt die aus zwei Oktetts bestehende Nummer des Teilnehmers an der betreffenden Endvermittlungsstelle. Darauf folgt das codierte Sprachsignal.

Anstelle der Kombination 11111111 können auch einige andere Kombinationen verwendet werden. Dabei ist sicherzustellen, daß die gewählte Kombination in einer mit HDLC betriebenen Datenverbindung nicht vorkommt.

Die zweite Vermittlungsstelle liest nach dem Zielbeginnzeichen nur das erste Oktett, vernichtet es, setzt die im Zielbeginnzeichen vorhandene Angabe über die Anzahl der Oktetts in der Zielkennungsfolge Z um eins herab und sendet das Zielbeginnzeichen und das Nachfolgende auf eine Leitung des durch das erste Oktett bezeichneten Bündels. Die nachfolgenden Vermittlungsstellen verfahren ebenso. Die letzte Vermittlungsstelle ist eine reine Teilnehmervermittlungsstelle, die außer dem Bündel zur übergeordneten Vermittlungsstelle nur Leitungen zu Teilnehmern hat. Diese Vermittlungsstelle liest nach dem Zielbeginnzeichen immer zwei Oktetts, vernichtet sie und sendet das Nachfolgende auf die Leitung des durch die beiden Oktetts bezeichneten Teilnehmers.

Die Phrasen P können in Teile von beispielsweise 8 ms ($=64$ Oktetts) unterteilt werden. Jede Phrase P besteht dann aus beliebig vielen solcher Teile. Bei der Übertragung werden die Teile unmittelbar aneinandergefügt. Zeigt der Sprachdetektor auf der Sendeseite an, daß die Phrase P beendet ist, so werden dem Ende des laufenden 8-ms-Teiles (oder einem der folgenden 8-ms-Teile, wenn das wegen der Sprachdetektion erforderlich ist) mindestens zwei Oktetts 11111111 angefügt, die das Ende der Phrase P den nachfolgenden Vermittlungsstellen anzeigen. Sollte das analoge Sprachsignal auf der Sendeseite zufällig am Anfang eines 8-ms-Teiles die Übertragung zweier Oktetts 11111111 erfordern, wodurch ein Phrasenendekriterium vorgetäuscht würde, so verändert die erste Vermittlung beim zweiten Oktett das Bit mit der geringsten Wertigkeit von 1 auf 0. Der dadurch entstehende Fehler in der Sprachübertragung ist selten und vernachlässigbar. Am Ende einer Phrase P sendet jede Vermittlungsstelle so lange Oktetts 11111111 auf die Leitung, bis sie eine neue Phrase P — meist von einem anderen Dialog, d. h. für eine andere virtuelle Verbindung — übertragen will. Die empfangende Endvermittlungsstelle sendet während der erkannten Sprechpause Oktetts mit der Bedeutung »kein Sprechsignal« auf die Teilnehmerleitung, z. B. bei PCM 00000000.

Man könnte auch festlegen, zwischen den Phrasen P nicht nur mindestens zwei Oktetts 11111111 einzufügen, sondern eine größere Anzahl. Dadurch würde es zunehmend unwahrscheinlicher, daß im Sprachsignal zufällig diese Kombination vorkommt und ein Phrasenendkriterium vortäuscht. Nimmt man beispielsweise 16 Oktetts 11111111 an, brauchte man dieses Phrasenendkriterium nicht mehr zu schützen und könnte auch auf die Unterteilung der Phrase P in 8-ms-Teile verzichten.

Die Phrasen P eines Dialoges von Teilnehmer zu Teilnehmer müssen alle dieselbe Laufzeit aufweisen. Daher ist sicherzustellen, daß die Durchlaufzeit durch eine Vermittlungsstelle für alle Phrasen P des Dialogs gleich ist. Die Durchlaufzeit ist mindestens von der Dauer, die benötigt wird, um die erste Leitungsbündel-Kennung zu lesen, eine freie Leitung zu suchen und auf diese weiterzuschalten. Ist gerade keine Leitung frei, so darf die Phrase P nicht zusätzlich verzögert werden. Vielmehr ist der erste 8-ms-Teil der Phrase zu unterdrücken. Die Phrase P wird nun zeitrichtig, möglichst mit ihrem zweiten 8-ms-Teil ausgesendet. Ist auch dann keine Leitung frei, so wird auch der zweite 8-ms-Teil unterdrückt und zeitrichtig mit dem dritten Teil begonnen usw. In jedem Fall werden aber auch bei verkürzter Phrase P die noch abzuarbeitende Leitungsbündel-Kennungen und das Zielbeginnzeichen vorangestellt. Die Vermittlungsstelle orientiert sich dabei an dem Zielbeginnzeichen.

Wenn zwischen den Phrasen P nicht nur zwei, sondern mindestens 16 Oktetts 11111111 gesendet werden, so sind — wenn gerade keine Leitung frei ist — nur so viele Oktetts zu unterdrükken, wie sie der Dauer entsprechen, in der die Phrase P auf eine freie Leitung warten muß.

In diesem Fall könnte man auch auf ein Zielbeginnzeichen verzichten. Kann eine Phrase P in einer Vermittlungsstelle nicht weitergeleitet werden, weil gerade keine Leitung des Bündels frei ist, so sind immer 16 Oktetts zwischenzuspeichern und auszugeben, sobald eine Leitung frei ist. Anschließend ist der Rest der Phrase P zeitrichtig anzufügen. In den 16 Oktetts sind immer die Leitungsbündel-Kennungen enthalten.

Die virtuelle Verbindung V$_V$ läßt sich vorteilhafterweise auch über die Endvermittlungsstelle hinaus bis in eine Nebenstellenanlage oder bis zum Teilnehmer fortsetzen, indem die Funktionen Sprachpausenerkennung, Bildung von Phrasen P sowie bei großen Nebenstellenanlagen auch Sprachinterpolation dorthin verlegt werden und Auf- und Abbau der virtuellen Verbindung V$_V$ zur Nebenstellenanlage bzw. zum Teilnehmer verlagert werden.

Das angegebene Verfahren ist praktisch unabhängig von der Art der Sprachcodierung. Es ist nicht nur möglich, mit PCM und den verschiedenen DPCM zusammenzuarbeiten, sondern es ist auch möglich, dieses Verfahren auf höherwertige Sprachcodierungsverfahren auszudehnen, bei denen die analoge Sprache je nach der momentanen Eigenschaft des Sprachsignals mit mehr oder weniger Bits je Abtastwert codiert wird. Wenn man auch in den Sprechpausen die von einem Mikrophon abgegebenen Signale mit kleiner Bitrate codiert, müßte es bei Einführung weiterer netzeinheitlicher Leitungsgeschwindigkeiten möglich sein, Hintergrundinformation anstelle einer Sprechpause zu übertragen.

Die virtuelle Verbindung V$_V$ wird dadurch ausgelöst bzw. abgebaut, daß die Vermittlungsstelle des auslösenden Teilnehmers einen dem Beginn-Quittungs-Frame entsprechenden Auslöse-Frame aussendet, der alle Durchgangsvermittlungsstellen durchläuft und von der Vermittlungsstelle des anderen Teilnehmers empfangen und quittiert wird. Alle Vermittlungsstellen löschen nacheinander die entsprechenden Speicher-Einträge.

Zur Überwachung einer virtuellen Verbindung V$_V$ wird — wie an sich bekannt — bei jedem neuen Informationsabschnitt oder bei jeder neuen Phrase P in jeder Vermittlung ein Zeitglied in seinem Zustand »Null« gesetzt. Läuft das Zeitglied ab, ohne daß ein Informationsabschnitt oder eine Phrase P in einer der beiden Richtungen übertragen wird, wird die Verbindung ausgelöst, indem dem rufenden oder beiden Teilnehmern Auslöse-Frames gesendet werden.

Bei Sprachinterpolationssystemen wird mit einer bestimmten Wahrscheinlichkeit der Beginn einer Phrase P deswegen unterdrückt, weil gerade keine Leitung des Bündels frei ist.

Werden mehrere Abschnitte hintereinandergeschaltet, so erhöht sich diese Wahrscheinlichkeit entsprechend. Bei Verbindungen mit einem oder wenigen Abschnitten ist die Wahrscheinlichkeit kleiner als bei Verbindungen mit vielen Abschnitten. Dies kann in etwa ausgeglichen werden, indem die (dann immer erforderliche) Angabe im Zielbeginnzeichen über die noch vorhandenen Oktetts in Zielkennungsfolge Z als Prioritätskennzeichen verwendet wird und Phrasen P mit vielen Oktetts bei der Leitungszuteilung bevorzugt gegenüber solchen mit wenigen Oktetts berücksichtigt werden, indem beispielsweise für Verbindungen mit vielen Oktetts eine bestimmte Kapazität freigehalten wird. Unabhängig davon sollten die Bündel nicht so stark wie bei TASI mit nur einem Abschnitt ausgenutzt werden.

Der paketweise Transport von Daten-, Textsowie von redundanzarmen Faksimile- und Bildinformationen von Teilnehmer zu Teilnehmer erfordert neben sogenannten Ende-zu-Ende-Sicherungen auch eine gesicherte Übermittlung. Das bekannte Datenübertragungsverfahren »HDLC« gewährleistet dies auf einer temporär gestörten Datenverbindung. Dabei können allerdings Schwankungen der Paketlaufzeiten auftreten, verursacht durch Blockwiederholungen.

Im folgenden wird angenommen, daß eine HDCL-Prozedur-Variante für die Übermittlung von Paketen aller genannten Dienste geeignet ist und von CCITT festgelegt ist. Unter dieser Voraussetzung ist es für die Unterstützung aller Dienste ausreichend anzunehmen, daß das Netz neben Sprachphrasen auch HDLC-Frames ohne Laufzeitschwankungen von Teilnehmer zu Teilnehmer zu übertragen gestattet.

Für zwei kommunizierende Teilnehmer besteht eine von Teilnehmer zu Teilnehmer durchgehende Duplex-Verbindung, die zwischen dem Teilnehmer und der jeweils zugehörigen Endvermittlungsstelle als realer Verbindungsabschnitt ausgelegt ist und zwischen den beiden Endvermittlungsstellen virtuelle Verbindungsabschnitte enthält.

Die von Teilnehmer zu Teilnehmer bestehende Verbindung wird im folgenden als Datenverbindung angesehen, auf der HDLC-Frames mit der netzeinheitlichen Übertragungsgeschwindigkeit, z. B. 64 kbit/s, übermittelt werden. Da diese Verbindung Duplex-Charakter hat, kann eine Datenübertragung gleichzeitig in beiden Richtungen erfolgen.

Die Verbindung verhält sich wegen der virtuellen Verbindungsabschnitte zwischen den Endvermittlungsstellen wie eine nicht gesicherte Datenverbindung, auf der — bedingt durch mögliche temporäre Überlastfälle in den Bündeln — zusätzlich Störungen auftreten und HDLC-Frames verloren gehen können.

HDLC gewährleistet dank der Blocksicherung, Folgesicherung und Folgewiederherstellung bei Blockfehlern in jedem Fall eine sichere Datenübermittlung.

Bei HDLC werden die Daten in HDLC-Frames transportiert. Anfang und Ende eines HDLC-Frames sind durch Flags der Codierung 01111110 gekennzeichnet, wobei anzumerken ist, daß diese Flags nicht im Oktettrahmen des Netzes liegen müssen. Im folgenden wird diese Framebegrenzung als Bestandteil des Frame behandelt.

Im Gegensatz zu den zuvor beschriebenen Sprechverbindungen sollten auf der Teilnehmerleitung vor dem ersten und nach dem letzten HDLC-Frame Oktetts der Kombination 11111111 übertragen werden. Außerdem können derartige Oktetts auch zwischen den HDLC-Frames auftreten. Daher muß jede Endvermittlungsstelle von zugehörigen Teilnehmer ein Umschaltkriterium »Umschalten auf Datenübertragung« sowie die entsprechende Rückschaltung am Ende der Datenübertragung erhalten. Dieses Umschaltkriterium kann entweder im 64-kbit/s-Kreis — wenn die zugehörige Vermittlung davon Kenntnis hat — oder in einem gesonderten Teilnehmersignalkreis übertragen werden.

Nach Aufbau der Datenverbindung bauen die Teilnehmer ihren Datenübertragungsabschnitt Punkt-zu-Punkt gemäß HDLC auf. Die zwischen den HDLC-Teilnehmern vereinbarten und benutzten HDLC-Adressen werden auf den virtuellen Verbindungsabschnitten weder in den Endnoch in den Durchgangsvermittlungsstellen beachtet.

Die HDLC-Frames enthalten HDLC-Steuerinformationen und Informationen für den HDLC-Benutzer. Außerhalb der Frames wird normalerweise mit permanent gesendeten Flags die Synchronisierung der HDLC-Partner aufrechterhalten. Dies ist in Digitalnetzen nicht erforderlich und nicht erwünscht. In Ruhephasen kann stattdessen auch das Kriterium »Idle« — definiert als mindestens 16 aufeinanderfolgende auf 1 gesetzte Bits — gesendet werden. Danach kann mit mindestens zwei Flags die Synchronisierung wiederhergestellt werden.

Wird von einem HDLC-Partner »Flag« statt »Idle« gesendet, so wird dies in der betreffenden Endvermittlungsstelle korrigiert.

»Idle« erlaubt es, einen Frame oder eine mit Flags verbundene Frame-Folge wie eine Sprachphrase zwischen den Endvermittlungsstellen zu übertragen. Aufgrund des HDLC-Kriteriums wird von der Endvermittlungsstelle die virtuelle Verbindung zur anderen Endvermittlungsstelle in den Ruhezustand versetzt. Auf die virtuellen Verbindungsabschnitte zwischen den Endvermittlungsstellen wird daraufhin abschnittsweise nacheinander das vereinbarte Kriterium gesendet, das den Ruhezustand der Leitung anzeigt, beispielsweise 2 oder 16 Kombinationen 11111111 oder andere Kombinationen, die in HDLC-Frames nicht vorkommen können. Das Oktett 11111111 erscheint hierfür besonders geeignet, da es im HDLC-Bitstrom für die Bedeutung »Idle« (Ruhezustand) bereits verwendet wird. Die folgende Betrachtung beschränkt sich der Einfachheit halber auf diese Kombination für das Anzeigen des Ruhezustandes einer Leitung.

Dem HDLC-Empfänger wird, solange keine Flags oder Frames auf seiner virtuellen Verbindung empfangen werden, von der empfangenen Endvermittlungsstelle »Idle« gemeldet.

Vorausgesetzt, es liegt kein temporärer Überlastfall vor, so gewährleistet das Übertragungsverfahren zwischen den Endvermittlungsstellen auch dann eine zeitrichtige Übertragung von Phrasen bzw. Frames, wenn »Idle« nur beispielsweise zwei Oktetts andauert. In diesem Fall wird für die nachfolgende Frame-Folge automatisch eine andere freie Leitung gesucht.

Vergleicht man die zuvor definierten Möglichkeiten der Beendigung einer Sprachphrase mit »Idle« — definiert als mindestens 2 Oktetts 11111111 —, so sind zwischen Sprach- und Datenübertragung zusätzlich noch gewisse Unterschiede feststellbar:

— HDLC schreibt dem Benutzer keine Oktettstruktur vor und zerstört überdies — beim Schutz der Bit-Kombination für Flag — eine innerhalb eines Frames vorgegebene Oktettstruktur (Bitstuffing). Daher kann »Idle« nicht oktettweise gesendet werden.

— Sieht man von der fehlenden Oktettstruktur ab, bleibt immer noch die Tatsache, daß bei Verwendung des Endekriteriums mit 16 Oktetts 11111111 dieses Endekriterium länger ist, als das kürzeste Idle-Kriterium bei HDLC (2 Oktetts 11111111).

Sollen Sprach- und HDLC-Verbindungen im Netz nicht unterschieden werden, müssen Sprachphrasen und Phrasen, die HDLC-Frames enthalten, einheitlich vermittelt werden können. Selbst wenn man im Netz zwischen Sprechverbindungen und Datenverbindungen unterscheidet, ist es wünschenswert, für Sprachphrasen und Phrasen, die HDLC-Frames enthalten, eine identische Struktur zu wählen.

Somit wird vorteilhafterweise das im folgenden angegebene Prinzip angewendet. Dem Vermittlungsnetz ist lediglich die Struktur, die für Sprachphrasen festgelegt wird, bekannt. Das bedeutet, daß der HDLC-Bitstrom (bestehend aus Flags, Frames und Idle) in den Endvermittlungsstellen auf Sprachphrasen und -pausen abgebildet wird. Der durch einen HDLC-Sender gesendete Bitstrom wird in der dem Sender zugehörigen Endvermittlungsstelle inclusive Flags und Idle auf 2 bzw. 16 Oktetts 11111111 abgetastet:

— Wird im Zustand »Sprachphrase« im HDLC-Bitstrom eine Bitanordnung gefunden, die der Sprechpause entspricht — also 2 oder 16 Oktetts 11111111 —, so gilt die Übertragung der »Sprachphrase«, die HDLC-Frames enthält, als abgeschlossen. Damit ist für die virtuelle Verbindung der Zustand »Sprechpause« eingestellt. Die betreffende Endvermittlungsstelle sendet das vereinbarte Kriterium für den Ruhezustand auf die zuletzt benutzte Leitung.
— Wird im Zustand »Sprechpause« im HDLC-Bitstrom die Kombination 01111110 (Flag) erkannt, so wird für die virtuelle Verbindung wieder der Zustand »Sprachphrase« eingestellt und eine »Sprachphrase«, die HDLC-Frames enthält, übertragen.

In bestimmten Fällen kann eine »Sprachphrase« mehrere HDLC-Frames enthalten, die durch kurze HDLC-Idle-Zustände unterbrochen sind.

Zur Synchronisierung wird in modernen Digitalnetzen durch das Netz der Teilnehmereinrichtung an der Schnittstelle der Bit- und der Oktett-Takt geliefert.

Bisher wurde davon ausgegangen, daß in den Durchgangs-Vermittlungsstellen Sprachphrasen, die Sprache enthalten, und »Sprachphrasen«, die HDLC-Frames enthalten, nicht unterschieden werden.

Unterscheidet man jedoch diese beiden, indem man sie mit dem Dienstkennzeichen im Zielkriterium kennzeichnet, läßt sich die Strategie bei temporärer Überlast verbessern. Die »Sprachphrasen«, die HDLC-Frames enthalten, können dann »vor« einem abgehenden Bündel im Speicher kurz zwischengespeichert und in der Reihenfolge ihres Eintreffens zu einem späteren Zeitpunkt unverstümmelt ausgegeben. Bei Überlauf des Pufferspeichers wird mit den (HDLC-Frames enthaltenden) »Sprachphrasen« genauso verfahren wie mit gewöhnlichen Sprachphrasen.

Benötigt ein Teilnehmer im Bereich der Daten-, Text-, Faksimile- und/oder Bildübertragung gleichzeitig mehrere Teilnehmer, so bieten sich die im folgenden beschriebenen Möglichkeiten an.

a)  Teilnehmerverbindung mit einem Teilnehmer »Paketvermittlung«:
Anstelle seiner gewünschten Endteilnehmer wählt ein HDLC-Teilnehmer einen speziellen Teilnehmer »Paketvermittlung« und übergibt ihm als Nutzinformation die Identifikation der gewünschten Endteilnehmer. Dieser Teilnehmer besitzt genügend Netzzugänge und baut zu jedem gewünschten Endteilnehmer eine eigene Datenverbindung auf.
Bei Anwendung dieses bekannten Prinzips (im Falle ISDN auch mit dem Begriff »Operationsmodul für Paketvermittlung« belegt) werden in dem hier zugrundegelegten Vermittlungssystem die einzelnen Datenverbindungen nur mit ihren tatsächlichen Nutzinformationen belastet.

b)  Teilnehmeranschluß mit hoher Geschwindigkeit:
Wird dem Teilnehmer eine N-fache Geschwindigkeit auf seiner Anschlußleitungen geboten, kann diese Leitung wie N normale Anschlußleitungen behandelt werden. Von diesem Teilnehmer wird die einzelne Leitung wie eine Bündelleitung angesehen.
Der Teilnehmer kann über einen N-fachen Anschluß gleichzeitig N verschiedene Teilnehmerverbindungen unterhalten.

c)  Mehrpunktübertragung:
Steht dem Teilnehmer nur ein Anschluß normaler Geschwindigkeit zur Verfügung, kann die zugehörige Endvermittlungsstelle für den Teilnehmer mehrere Daten-Verbindungen aufbauen und über entsprechende Kennzeichen diese für ihn identifizierbar machen. Dies bedeutet, daß zumindest im »Gesprächs«-Zustand einer Datenverbindung die virtuelle Verbindung bis zum mehrpunktfähigen Teilnehmer besteht.
Der mehrpunktfähige Teilnehmer kann dank der ihm identifizierbaren Teilnehmerverbindungen teilnehmerspezifisch (HDLC-Frames enthaltende) »Sprachphrasen« mit entsprechenden Zielkennzeichen senden. Die zugehörige Endvermittlungsstelle wird diese richtig weitervermitteln.
Von den fernen Teilnehmern in der Endvermittlungsstelle eintreffende »Sprachphrasen« können durchgeschaltet werden, wenn die Leitung zum mehrpunktfähigen Teilnehmer frei ist.

Ansonsten können, sofern Sprach- und HDLC-Verbindungen im Netz unterschieden werden und genügend Speichereinheiten frei sind, eintreffende »Sprachphrasen« zwischengespeichert werden, oder sie gehen auf der virtuellen Verbindung verloren und werden, wie bei HDLC vorgesehen, wiederholt.

Zur Vermeidung häufiger Zusammenstöße kann der mehrpunktfähige Teilnehmer auf höherer Kommunikationsebene das Senderecht auch explizit, im Sinne eines »Einzel-Poll-Verfahrens« vergeben.

Ein analoges Konzept kann für Sprechverbindungen verwendet werden, wenn man das Leistungsmerkmal »Makeln« realisieren will.

Fig. 2 und Fig. 3 zeigen, wie bereits erläutert, jeweils schematisch den Aufbau einer ersten bzw. einer zweiten Aufbaudatenfolge D' bzw. D". Dabei ist mit W die Wählinformation bezeichnet, die die Zielvermittlungsstellen-Kennung $KVSt_B$ und die Zielteilnehmer-Kennung KB enthält. Mit I ist die Identifikationsinformation bezeichnet, die die Ursprungsvermittlungsstellen-Kennung $KVSt_A$ und die Ursprungsteilnehmer-Kennung KA enthält. Mit $A-D_1$ bzw. $D_1-D_2$ sind Leitungsbündel-Kennungen bezeichnet.

Fig. 4 zeigt, wie ebenfalls bereits erläutert, schematisch den Aufbau einer Sprachinformation S, wobei mit Z die Zielkennungsfolge, mit P die Phrase und mit E eine Endekennung bezeichnet ist.

Die gegebene Beschreibung und die Figuren beziehen sich jeweils lediglich auf ein bevorzugtes Ausführungsbeispiel für die vorliegende Erfindung.

**Patentansprüche**

1. Universelles Digitalnetz zur paketvermittelten Informationsübertragung, bei dem eine von einem Ursprungsendgerät (A) in eine Ursprungsvermittlungsstelle ($VSt_A$) eingegebene Wählinformation (W) dazu verwendet wird, eine von der Ursprungsvermittlungsstelle ($VSt_A$) ausgehende, im Bedarfsfalle über eine oder mehrere Durchgangsvermittlungsstellen ($VSt_{D1}$ ... $VSt_{Dn}$) verlaufende und bis zu einer Zielvermittlungsstelle ($VSt_B$), an die ein betreffendes Zielendgerät (B) angeschlossen ist, reichende virtuelle Verbindung ($V_V$) aufzubauen, daß eine zu übertragende Information (S) in Informationsabschnitte mit variablen, von dem Übertragungsverfahren und dem Vermittlungsverfahren nicht begrenzten Längen eingeteilt wird, dadurch gekennzeichnet, daß jeweils ein Informationsabschnitt in Form eines Blockes mit einer vorangestellten Zielkennungsfolge (Z), die Angaben über jeweils zu durchlaufende virtuelle Teilverbindungen ($V_T$) enthält, und mit einer an das Ende des Informationsabschnittes gestellten und dessen Ende signalisierenden Endekennung (E) über die jeweils für einen betreffenden aktuellen Block zwischen zwei Vermittlungsstellen aufgebaute reale Teilverbindung zeitrichtig übertragen wird, daß die Informationsabschnitte an ein vorbestimmtes, in Rasterabschnitte unterteilbares Zeitraster angepaßt sind, daß jeweils vollständige Rasterabschnitte eines aktuellen Informationsabschnittes unterdrückt werden, wenn keine reale Leitung zeitgerecht zur Verfügung steht, daß von dem Augenblick an, zu dem eine reale Leitung zur Verfügung steht, der Rest des Informationsabschnittes zeitrichtig mit Beginn eines neuen Rasterabschnittes übertragen wird und daß die virtuelle Verbindung ($V_V$) nach Beendigung der Informationsübertragung abgebaut wird.

2. Universelles Digitalnetz nach Anspruch 1, dadurch gekennzeichnet, daß das Zeitraster aus Rasterabschnitten der Dauer von 8 ms besteht.

3. Universelles Digitalnetz zur paketvermittelten Informationsübertragung, bei dem eine von einem Ursprungsendgerät (A) in eine Ursprungsvermittlungsstelle ($VSt_A$) eingegebene Wählinformation (W) dazu verwendet wird, eine von der Ursprungsvermittlungsstelle ($VSt_A$) ausgehende, im Bedarfsfalle über eine oder mehrere Durchgangsvermittlungsstellen ($VSt_{D1}$ ... $VSt_{Dn}$) verlaufende und bis zu einer Zielvermittlungsstelle ($VSt_B$), an die ein betreffendes Zielendgerät (B) angeschlossen ist, reichende virtuelle Verbindung ($V_V$) aufzubauen, daß eine zu übertragende Information (S) in Informationsabschnitte mit variablen, von dem Übertragungsverfahren und dem Vermittlungsverfahren nicht begrenzten Längen eingeteilt wird, dadurch gekennzeichnet, daß jeweils ein Informationsabschnitt in Form eines Blockes mit einer vorangestellten Zielkennungsfolge (Z), die Angaben über jeweils zu durchlaufende virtuelle Teilverbindungen ($V_T$) enthält, und mit einer an das Ende des Informationsabschnittes gestellten und dessen Ende signalisierenden Endekennung (E) über die jeweils für einen betreffenden aktuellen Block zwischen zwei Vermittlungsstellen aufgebaute reale Teilverbindung zeitrichtig übertragen wird, daß jeweils die ersten 16 Oktetts eines aktuellen, augenblicklich nicht übertragbaren Informationsabschnittes zwischengespeichert werden, daß, sobald eine Leitung zur Verfügung steht, diese 16 zwischengespeicherten Oktetts übertragen werden, daß anschließend an die Übertragung der 16 zuvor zwischengespeicherten Oktetts der aktuelle Rest des Informationsabschnittes zeitrichtig entsprechend dem Zeitraster angefügt und übertragen wird und daß die virtuelle Verbindung ($V_V$) nach Beendigung der Informationsübertragung abgebaut wird.

4. Universelles Digitalnetz nach Anspruch 1, 2 oder 3, dadurch gekennzeichnet, daß zum Aufbauen der virtuellen Verbindung ($V_V$) zunächst aufgrund eines die Vielvermittlungsstelle ($VSt_B$) bestimmenden Teils der Wählinformation (W), nämlich einer Zielvermittlungsstellen-Kennung ($KVSt_B$), eine Leitwegsuche durchgeführt wird, bei der ein Leitungsbündel, über das die Ursprungsvermittlungsstelle ($VSt_A$) mittelbar mit der Zielvermittlungsstelle ($VSt_B$) verbindbar oder unmittelbar mit dieser verbunden ist und in dem zum Zeitpunkt des Beginns der Leitwegsuche Informationsübertragungskapazität frei ist, ausgesucht wird, daß die Ursprungsvermittlungsstelle ($VSt_A$) über eine freie Leitung des ausgesuchten Leitungsbündels, das zu einer Durchgangsvermittlungsstelle ($VSt_{D1}$) oder zu der Zielvermittlungsstelle ($VSt_B$) führt, eine Aufbaudatenfolge (D') an diese Durchgangsvermittlungsstelle ($VSt_{D1}$) oder an die Zielvermittlungsstelle ($VSt_B$) sendet, wobei die Aufbaudatenfolge (D') die Wählinformation (W) in Form der Zielvermittlungsstellen-Kennung ($KVSt_B$) und einer Zielendgerät-Kennung (KB) sowie eine Identifikationsinformation (I) in Form einer Ursprungsvermittlungsstellen-Kennung ($KVSt_A$) und einer Ursprungsendgerät-Kennung (KA) sowie eine das ausgesuchte Leitungsbündel betreffende Leitungsbündel-Kennung ($A-D_1$) enthält, daß, falls das ausgesuchte Leitungsbündel nicht unmittelbar zu der Zielvermittlungsstelle ($VSt_B$), sondern zu der Durchgangsvermittlungsstelle ($VSt_{D1}$) führt, diese aufgrund der Zielvermittlungsstellen-Kennung ($KVSt_B$) innerhalb der Wählinformation (W) eine Leitwegsuche durchführt, bei der ein weiteres Leitungsbündel, über das die erste Durchgangsvermittlungsstelle ($VSt_{D1}$) mittelbar über eine weitere Durchgangsvermittlungsstelle (VSt$_{D2}$) mit der Zielvermittlungsstelle (VSt$_B$) verbindbar ist oder unmittelbar mit dieser verbunden ist und in dem zum Zeitpunkt des Beginns dieser Leitwegsuche Informationsübertragungskapazität frei ist, ausgesucht wird, daß die erste Durchgangsvermittlungsstelle (VSt$_{D1}$) über eine freie Leitung des ausgesuchten Leitungsbündels, das zu der weiteren Durchgangsvermittlungsstelle (VSt$_{D2}$) oder zu der Zielvermittlungsstelle (VSt$_B$) führt, eine weitere Aufbaudatenfolge (D″) an die zweite Durchgangsvermittlungsstelle (VSt$_{D2}$) oder die Zielvermittlungsstelle (VSt$_B$) sendet, wobei die weitere Aufbaudatenfolge (D″) die Wählinformation (W) in Form der Zielvermittlungsstellen-Kennung (KVSt$_B$) und der Zielendgerät-Kennung (KB) sowie die Identifikationsinformation (I) in Form der Ursprungsvermittlungsstellen-Kennung (KVSt$_A$) und der Ursprungsendgerät-Kennung (KA) sowie die erste Leitungsbündelkennung (A-D$_1$) und eine weitere Leitungsbündel-Kennung (D$_1$-D$_2$) bzw. (D$_1$-VSt$_B$) enthält, daß jeweils bei Durchlaufen einer weiteren Durchgangsvermittlungsstelle (VSt$_{D3}$ ... VSt$_{Dn}$) eine weitere Leitwegsuche durchgeführt wird und jeweils die das ausgesuchte Leitungsbündel betreffende Leitungsbündel-Kennung an die jeweils bereits bestehende Aufbaudatenfolge angefügt wird, daß die Zielvermittlungsstelle (VSt$_B$) die an sie gerichtete, von der im Verbindungszug vor ihr liegenden Durchgangsvermittlungsstelle (z. B. VSt$_{D2}$) oder unmittelbar von der Ursprungsvermittlungsstelle (VSt$_A$) gesendete Aufbaudatenfolge (z. B. D″) speichert und ein die gesamte Information der bis zum Erreichen der Zielvermittlungsstelle (VSt$_B$) entstendenen Aufbaudatenfolge (z. B. D″) enthaltendes Quittungstelegramm über alle Durchgangsvermittlungsstellen (VSt$_{D1}$ ... VSt$_{Dn}$) an die Ursprungsvermittlungsstelle (VSt$_A$) zurücksendet, wo diese Information ebenfalls gespeichert wird, und daß die realen Teilverbindungen jeweils ausgelöst werden, nachdem zuvor in jeder betreffenden Durchgangsvermittlungsstelle (VSt$_{D1}$, VSt$_{D2}$) die jeweils gesendete Aufbaudatenfolge (z. B. D″) bzw. das Quittungstelegramm gespeichert worden ist.

5. Universelles Digitalnetz nach einem der Ansprüche 1 bis 4, dadurch gekennzeichnet, daß die zu übertragende Information (INF) aus Echtzeitdaten besteht und daß sowohl das Ursprungsendgerät (A) als auch das Zielendgerät (B) beispielsweise eine messende Einrichtung oder ein Proßezrechner ist.

6. Universelles Digitalnetz nach einem der Ansprüche 1 bis 4, dadurch gekennzeichnet, daß die zu übertragende Information (INF) eine digitalisierte Sprachinformation (S) ist, daß die Informationsabschnitte Phrasen, d. h. dem Redefluß angepaßte Sprachabschnitte (P) sind und daß das Ursprungsendgerät (A) bzw. das Zielendgerät (B) eine Fernsprechstation ist.

7. Universelles Digitalnetz nach Anspruch 6, dadurch gekennzeichnet, daß jeweils sendeseitig ein der ein Teil der betreffenden Sprechverbindung bildenden Leitung an geeigneter Stelle, beispielsweise in einer ersten Gruppenwahlstufe, der Ursprungsvermittlungsstelle (VSt$_A$) bzw. der Zielvermittlungsstelle (VSt$_B$) fest oder bedarfsweise zugeordneter Sprachdetektor vorgesehen ist, der in der Lage ist, Sprechpausen zu erkennen und daraufhin die Phrasen (P) zu bilden, daß jeweils empfangsseitig eine der ein Teil der betreffenden Sprechverbindung bildenden Leitung an geeigneter Stelle, beispielsweise in einer Leitungswahlstufe der Zielvermittlungsstelle (VSt$_B$) bzw. der Ursprungsvermittlungsstelle (VSt$_A$), fest oder bedarfsweise zugeordnete Einrichtung vorgesehen ist, die in der Lage ist, beim Eintreffen des Kriteriums für die »Sprechpause« ein Pausensignal zu dem hörenden Teilnehmer zu senden.

8. Universelles Digitalnetz nach Anspruch 7, dadurch gekennzeichnet, daß nach dem Erkennen der Endekennung (E) eines Informationsabschnittes die reale Leitung zwischen den betreffenden Vermittlungsstellen entweder für eine andere virtuelle Verbindung, ggf. für dieselbe virtuelle Verbindung (V$_V$), zur Verfügung steht oder frei ist und daß im letzteren Falle von der jeweils sendenden Vermittlungsstelle Oktetts zur Kennzeichnung des Ruhezustandes auf die Leitung gegeben werden.

9. Universelles Digitalnetz nach Anspruch 8, dadurch gekennzeichnet, daß die Oktetts zur Kennzeichnung des Ruhrzustandes die gleiche Form wie die Endekennung (E) haben.

10. Universelles Digitalnetz nach Anspruch 7, dadurch gekennzeichnet, daß das eine Phrase (P) bildende codierte Sprachsignal nur in der jeweils dem sendenden Teilnehmer am nächsten liegenden Vermittlungsstelle, nämlich entweder in der Ursprungsvermittlungsstelle (VSt$_A$) oder für eine Sprachübertragung in der Gegenrichtung der Zielvermittlung (VSt$_B$), für eine vorbestimmte Zwischenspeicherzeit von beispielsweise 15 ms zwischengespeichert wird, in welcher Zwischenspeicherzeit die der zu sendenden Phrase (P) voranzustellende Zielkennungsfolge (Z) ausgesendet wird.

11. Universelles Digitalnetz nach Anspruch 10, dadurch gekennzeichnet, daß die Zwischenspeicherzeit so groß gewählt wird, daß eine Karenzzeit entsteht, innerhalb derer eine Unterscheidungsmöglichkeit zwischen Sprache einerseits und Knackgeräuschen andererseits gegeben ist.

12. Universelles Digitalnetz nach einem der vorhergehenden Ansprüche, dadurch gekennzeichnet, daß für einen Informationsabschnitt mit einer überdurchschnittlichen Anzahl von Oktetts in der Zielkennungsfolge (Z) eine Prioritätsangabe vorgesehen ist, aufgrund derer ein derart gekennzeichneter Informationsabschnitt bei dem jeweils aktuellen Aufbau einer realen Verbindung bevorzugt berücksichtigt wird.

13. Universelles Digitalnetz nach Anspruch 1, 2 oder 3, dadurch gekennzeichnet, daß ein Zielbeginnzeichen vorgesehen ist und daß in dem Zielbeginnzeichen an dessen Anfang eine Information über die Länge der Zielkennungsfolge (Z) vorgesehen ist.

14. Universelles Digitalnetz nach Anspruch 1, 2 oder 3, dadurch gekennzeichnet, daß in der Zielkennungsfolge (Z) eine Dienstkennung enthalten ist.

15. Universelles Digitalnetz nach Anspruch 14, dadurch gekennzeichnet, daß in der Dienstkennung eine Angabe darüber enthalten ist, ob die Bitfolge für den betreffenden Informationsabschnitt sendeseitig verschlüsselt worden ist, und daß in der Dienstkennung eine Angabe über die Art der Verschlüsselung enthalten ist.

16. Universelles Digitalnetz nach Anspruch 4, dadurch gekennzeichnet, daß die Aufbaudatenfolgen (D', D") mit einem Sicherungsbit, beispielsweise einem Paritätsbit, gesichert sind.

17. Universelles Digitalnetz nach Anspruch 13, dadurch gekennzeichnet, daß die in dem Zielbeginnzeichen enthaltene Angabe über die Anzahl der in der Zielkennungsfolge (Z) enthaltenen Oktetts jeweils nach dem Verbrauch und der anschließenden Vernichtung eines Oktetts um 1 verringert wird.

18. Universelles Digitalnetz nach Anspruch 4, dadurch gekennzeichnet, daß jedes Leitungsbündel in der Aufbaudatenfolge (D', D") jeweils lokal unabhängig bezeichnet wird und daß die betreffende Leitungsbündel-Kennung (z. B. A-D₁) durch vorzugsweise 1 Oktett bezeichnet ist.

19. Universelles Digitalnetz nach einem der Ansprüche 9 oder 12 bis 18, dadurch gekennzeichnet, daß für den Fall, daß Daten-, Text-, Faksimile- und/oder Bildinformation übertragen werden soll, der jeweiligen Endvermittlungsstelle (VSt_A bzw. VSt_B) von dem betreffenden Endgerät (A bzw. B) ein Umschaltkriterium mit der Bedeutung »Umschalten auf Datenübertragung« übermittelt wird und daß dann auf der jeweils betreffenden Leitung zwischen dem Endgerät (A bzw. B) und der Endvermittlungsstelle (VSt_A bzw. VSt_B) vor dem ersten HDLC (High-Data-Link-Control)-Frame und nach dem letzten HDLC-Frame und ggf. auch zwischen den HDLC-Frames der zu übertragenden Daten-, Text-, Faksimile- und/oder Bildinformation jeweils Oktetts, beispielsweise der Form 11111111, in beliebiger Anzahl übertragen werden können, daß für den Fall, daß anschließend Sprache übertragen werden soll, der jeweiligen Endvermittlungsstelle (VSt_A bzw. VSt_B) von dem betreffenden Endgerät (A bzw. B) ein Umschaltkriterium mit der Bedeutung »Umschalten auf Sprachübertragung« übermittelt wird und daß dann auf der jeweils betreffenden Leitung zwischen dem Endgerät (A bzw. B) und der Endvermittlungsstelle VSt_A bzw. VSt_B) vor der ersten Sprachphrase, nach der letzten Sprachphrase und zwischen den Sprachphrasen Oktetts, beispielsweise der Form 00000000, übertragen werden können.

20. Universelles Digitalnetz nach Anspruch 19, dadurch gekennzeichnet, daß die Umschaltkriterien aus der Dienstkennung abgeleitet werden.

21. Universelles Digitalnetz nach Anspruch 20, dadurch gekennzeichnet, daß die betreffenden Teilnehmer einen benötigten Datenübermittlungsabschnitt nach dem an sich bekannten HDLC-Verfahren Punkt-zu-Punkt aufbauen und daß die zwischen solchen HDLC-Teilnehmern vereinbarten und benutzten HDLC-Adressen auf der virtuellen Verbindung weder von der betreffenden Endvermittlungsstelle (z. B. VSt_A) noch von den ggf. beteiligten Durchgangsvermittlungsstellen (VSt_D1 ... VSt_Dn) beachtet werden.

22. Universelles Digitalnetz nach Anspruch 19 oder 21, dadurch gekennzeichnet, daß ein Teilnehmer für den Fall, in dem er gleichzeitig mehrere Verbindungen zu verschiedenen Teilnehmern benötigt, anstelle der von ihm gewünschten Teilnehmer einen besonderen Anschluß »Paketvermittlung« anwählt und diesem Anschluß als Nutzinformation die Identifikationen aller gewünschten Teilnehmer übermittelt, daß für den Anschluß »Paketvermittlung« eine ausreichende Anzahl von Netzzugängen vorgesehen ist und daß der Anschluß »Paketvermittlung« zu jedem der gewünschten Teilnehmer eine individuelle Datenverbindung aufbaut.

## Claims

1. A universal digital network for packet-switched data transmission, wherein an item of dialling information (W) input into an original exchange (VSt_A) by an original terminal (A) is used to establish a virtual connection which emanates from the original exchange (VSt_A), which extends when necessary via one or more than one transit exchange (VSt_D1) ... VSt_Dn) and extends to a target exchange (VSt_B) to which a target terminal (B) is connected, that an item of information (S) which is to be transmitted is divided into information sections having varable lengths which are not limited by the transmission process and the switching process, characterised in that an information section, in the form of a block comprising a preceding target code sequence (Z) which contains information concerning virtual subsidiary connections (V_T) which may need to be passed through and comprising an end code (E) which is attached to the end of the information section and signals the end thereof, is promptly transmitted via the real subsidiary connection which is established between two exchanges for a relevant current block, that the information sections are matched to a predetermined time raster which can be sub-divided into raster sections, that complete raster sections of a current information section are suppressed when no real line is promptly available, that from the moment at which a real line is available, the remainder of the information section is promptly transmitted at the beginning of a new raster section and that the virtual connections (V_V) is disestablished at the end of the information transmission.

2. A universal digital network as claimed in claim 1 characterised in that the time raster comprises raster sections whose duration amounts to 8 ms.

3. A universal digital network for packet-switched data transmission, wherein an item of dialling information (W) input into an original exchange (VSt$_A$) by an original terminal (A) is used to establish a virtual connection (V$_V$) which emanates from the original exchange (VSt$_A$), extends where necessary via one or more transit exchange (VSt$_{D1}$ ... VSt$_{Dn}$) and extends to a target exchange (VSt$_B$) to which a target terminal (B) is connected, that an item of information (S) which is to be transmitted is divided into information sections having varable lengths which are not limited by the transmission process and the switching process, characterised in that an information section in the form of a block comprising a preceding target code sequence (Z) which contains information relating to virtual subsidiary connections (V$_T$) which are to be passed through and comprising an end code (E) which is attached to the end of the information section and signals the end thereof, is promptly transmitted via the real subsidiary connection which is established between two exchanges for a relevant current block, that the first 16 octets of a current, instantaneously non-transmissible information section are intermediately stored, that as soon as a line is available these 16 intermediately stored octets are transmitted, that following the transmission of the 16 previously intermediately stored octets the current remainder of the information section is promptly attached in accordance with the time raster and is transmitted, and that the virtual connection (V$_V$) is disestablished at the end of the information transmission.

4. A universal digital network as claimed in claim 1, 2 or 3, characterised in that for the establishment of the virtual connection (V$_V$) firstly a route-finding operation is carried out on the basis of a portion of the dialling information (W) which specifies the target exchange (VSt$_B$), namely a target exchange code (KVSt$_B$), wherein al line group is selected via which the original exchange (VSt$_A$) can be indirectly connected to the target exchange (VSt$_B$) or is directly connected thereto and in which information transmission capacity is available at the beginning of the route-finding operation, that via a free line of the selected line group which leads to a transit exchange (VSt$_{D1}$) or to a target exchange (VSt$_B$), the original exchange (VSt$_A$) transmits an establishment data sequence (D') to this transit exchange (VSt$_{D1}$) or to the target exchange (VSt$_B$), where the establishment data sequence (D') includes the dialling information (W) in the form of the target exchange code (KVSt$_B$) and a target terminal code (KB), further includes an item of identification information (I) in the form of an original exchange code (KVSt$_A$) and an original terminal code (KA), and further contains a line group code (A-D$_1$) relating to the selected line group, that if the selected line group does not lead directly to the target exchange (VSt$_B$) but to the transit exchange (VSt$_B$), then on the basis of the target exchange code (KVSt$_B$) within the dialling information (W) said transit exchange carries out a route-finding operation wherein a further line group is selected via which the first transit exchange (VSt$_{D1}$) can be indirectly connected via a further transit exchange (VSt$_{D2}$) to the target exchange (VSt$_B$) or is directly connected thereto and in which information transmission capacity is available at the beginning of this route-finding operation, that via a free line of the selected line group which leads to the further transit exchange (VSt$_{D2}$) or to the target exchange (VSt$_B$), the first transit exchange (VSt$_{D1}$) transmits a further establishment data sequence (D") to the second transit exchange (VSt$_{D2}$) or to the target exchange (VSt$_B$), where the further establishment data sequence (D") contains the dialing information (W) in the form of the target exchange code (KVSt$_B$) and the target terminal code (KB), further contains the item of identification information (I) in the form of the original exchange code (KVSt$_A$) and the original terminal code (KA), and further contains the first line group code (A-D$_1$) and a further line group code (D$_1$-D$_2$) or D$_1$-VSt$_B$), that whenever a further transit exchange (VSt$_{D3}$ ... VSt$_{Dn}$) is passed through, a further route-finding operation is performed and the line group code which relates to the selected line group is attached to the already existing establishment data sequence, that the target exchange (VSt$_B$) stores the establishment data sequence (e. g. D") which is directed towards it and which has been transmitted from the preceding transit exchange (e. g. VSt$_{D2}$) in the connection path or directly from the original exchange (VSt$_A$) and returns an acknowledgement telegram, which contains the entire information of the establishment data sequence (e. g. D") which has been formed by the time the target exchange (VSt$_B$) has been reached, via all the transit exchanges (VSt$_{D1}$ ... VSt$_{Dn}$) to the original exchange (VSt$_A$) where this information is likewise stored, and that the real subsidiary connections are cleared when the transmitted establishment data sequence (e. g. D") or the acknowledgement telegram has been previously stored in each relevant transit exchange (VSt$_{D1}$, VSt$_{D2}$).

5. A universal digital network as claimed in one of the claims 1 to 4, characterised in that the information (INF) which is to be transmitted comprises real-time data and that both the original terminal (A) and the target terminal (B) comprise, for example, a measuring device or a process computer.

6. A universal digital network as claimed in one of the claims 1 to 4, characterised in that the information (INF) which is to be transmitted is a digitalised item of speech information (S), that the information sections are phrases (P), i. e. speech sections matched to the speech flow, and that the original terminal (A) and the target terminal (B) are telephone stations.

7. A universal digital network as claimed in claim 6, characterised in that at the transmitting end there is in each case arranged a speech detector which is assigned, permanently or as and when required, at a suitable point, for example in a first group selection stage of the original exchange (VSt$_A$) or the target exchange (VSt$_B$), to that line which forms part of the relevant speech connection, and which speech detector is capable of recognising speech intervals and subsequently forming the phrases (P), that at the receiving end there is in each case arranged a device which is assigned, permanently or as and when required, to the line which forms part of the relevant speech connection at a suitable point, for example in a line selection stage of the target exchange (VSt$_B$) or the original exchange (VSt$_A$), and which device is capable of transmitting an interval signal to the listening subscriber on the arrival of the criterion for the »speech interval«.

8. A universal digital network as claimed in claim 7, characterised in that following the recognition of the end code (E) of an information section, the real line between the relevant exchanges is available either for another virtual connection, possibly for the same virtual connection (V$_V$), or is free, and that in the latter case the transmitting exchange supplies the line with octets which characterised the rest state.

9. A universal digital network as claimed in claim 8, characterised in that the octets which serve to characterised the rest state have the same form as the end code (E).

10. A universal digital network as claimed in claim 7, characterised in that the coded speech signal which forms a phrase (P) is intermediately stored for a predetermined intermediate storage time of for example 15 ms only in the exchange which lies closest to the transmitting subscriber, namely either in the original exchange (VSt$_A$) or, for speech transmission in the opposite direction, in the target exchange (VSt$_B$), in which intermediate storage time the target code sequence (Z) which is to precede the phrase (P) to be transmitted is transmitted.

11. A universal digital network as claimed in claim 10, characterised in that the length of the intermediate storage time is selected to be such that a waiting time occurs within which it is possible to differentiate between speech on the one hand and clicking noises on the other hand.

12. A universal digital network as claimed in one of the preceding claims, characterised in that for an inforamtion section having an above-average number of octets in the target code sequence (Z) an item of priority information is provided on the basis of which an information section characterised in this way is given preferred consideration in the current establishment of a real connection.

13. A universal digital network as claimed in claim 1, 2 or 3, characterised in that a target-start characteristic is provided and that the beginning of the target-start characteristic contains an item of information relating to the length of the target code sequence (Z).

14. A universal digital network as claimed in claim 1, 2 or 3, characterised in that a service code is contained in the target code sequence (Z).

15. A universal digital network as claimed in claim 14, characterised in that the service code contains an item of information as to whether the bit sequence for the relevant information section has been coded at the transmitting end and that the service code contains an item of information relating to the type of coding.

16. A universal digital network as claimed in claim 4, characterised in that the establishment data sequence (D', D") are safeguarded by a safeguarding bit, for example a parity bit.

17. A universal digital network as claimed in claim 13, characterised in that the information which is contained in the target-start characteristic and which relates to the number of octets contained in the target code sequence (Z) is reduced by 1 following the comsumption and subsequent nullification of an octet.

18. A universal digital network as claimed in claim 4, characterised in that each line group in the establishment data sequence (D', D") is independently designated locally, and that the relevant line group code (e. g. A-D$_1$) is designated by preferably 1 octet.

19. A universal digital network as claimed in one of the claims 9 or 12 to 18, characterised in that in the event that an item of data-text- facsimile- and/or video information is to be transmitted, the relevant end exchange (VSt$_A$ or VSt$_B$) is supplied by the relevant terminal (A or B) with a switchover criterion having the significance »switch-over to data transmission«, and that then octets, for example in the form 11111111, can be transmitted in arbitrary numbers on the relevant line between the terminal (A or B) and the end exchange (VSt$_A$ or VSt$_B$) before the first HDLC- (high-data-link-control) frame and following the last HDLC-frame and possibly also between the HDLC-frames of the data-text- facsimile- and/or video information which is to be transmitted, that in the event that speech is to be subsequently transmitted, the relevant end exchange (VSt$_A$ or VSt$_B$) is supplied by the relevant terminal (A or B) with a switch-over criterion having the significance »switch-over to speech transmission«, and that then octets, for example in the form 00000000, can be transmitted on the relevant line between the terminal (A or B) and the end exchange (VSt$_A$ or VSt$_B$) before the first speech phrase, following the last speech phrase and between the speech phrases.

20. A universal digital network as claimed in claim 19, characterised in that the switch-over cirteria are derived from the service code.

21. A universal digital network as claimed in claim 20, characterised in that the relevant subscribers establish a necessary data transmission section in point-to-point fashion in accordance with the HDLC-process which is known per se and that the HDLC-addresses which are agreed upon and used between such HDLC-subscribers are not observed on the virtual connection either by the relevant end exchange (e. g. VSt$_A$) or by any participating transit exchanges (VSt$_{D1}$ ...

VSt_{Dn}).

22. A universal digital network as claimed in claim 19 or 21, characterised in that in the event that a subscriber simultaneously requires a plurality of connections to various subscribers, then in place of the desired subscriber a subscriber selects a special »packet switching« terminal and supplies this terminal with the identifications of all the required subscribers by way of useful information, that an adequate number of network addresses is provided for the »packet switching« terminal and that the »packet switching« terminal establishes an individual data connection to each of the required subscribers.


**Revendications**

1. Réseau numérique universel utilisé pour la transmission d'informations par paquets commutés, dans lequel une information de sélection (W), introduite par un appareil terminal de départ (A) dans un central de départ (VSt_A) est utilisée pour établir une liaison virtuelle (V_V) partant du central de départ (VSt_A), passant en cas de besoin par l'intermédiaire d'un ou de plusieurs centraux de transit (VSt_{D1} ... VSt_{Dn}) et s'étendant jusqu'à un central de destination (VSt_B), auquel est raccordé l'appareil terminal de destination (B) concerné, et dans lequel une information (S) devant être transmise est subdivisée en des segments d'informations possédant des longueurs variables non limitées par le procédé de transmission ni par le procédé de commutation, caractérisé par le fait qu'un segment respectif d'informations est transmis d'une manière correcte dans le temps, sous la forme d'un bloc comportant une suite (Z) formant indicatif de destination et disposée en tête et qui contient des indications concernant respectivement des liaisons partielles (V_T) devant être acheminées, et comportant un indicatif de fin (E), positionné à la fin du segment d'information et signalant cette fin, par l'intermédiaire d'une liaison partielle réelle établie respectivement pour un bloc actuel considéré entre deux centraux, que les segments d'information sont adaptés à une trame temporelle prédéterminée pouvant être subdivisée en des éléments de trame, que des éléments complets de trame d'un segment actuel d'informations sont supprimés lorsqu'aucune ligne réelle n'est disponible en temps opportun et qu'à l'instant où une ligne réelle est disponible, le reste du segment d'informations est transmis de façon correcte dans le temps au début d'un nouvel élément de trame et que la liaison virtuelle (V_V) est supprimée à la fin de la transmission de l'information.

2. Réseau numérique universel selon la revendication 1, caractérisé par le fait que la trame temporelle est constituée par des éléments de trame d'une durée de 8 ms.

3. Réseau numérique universel pour la transmission d'informations à commutation de paquets, selon lequel une information de sélection (W), introduite par un appareil terminal de départ (A) dans un central de départ (VSt_A), est utilisée pour établir une liaison virtuelle (V_V) partant du central de départ (VSt_A), passant en cas de besoin par l'intermédiaire d'un ou de plusieurs centraux de transit (VSt_{D1} ... VSt_{Dn}) et s'étendant jusqu'à un central de destination (VSt_B), auquel est raccordé l'appareil terminal de destination (B) concerné, et dans lequel une information (S) devant être transmise est subdivisée en des segments d'informations possédant des longueurs variables non limitées par le procédé de transmission ni par le procédé de commutation, caractérisé par le fait qu'un segment d'information est transmis d'une manière correcte dans le temps, sous la forme d'un bloc comportant une suite (Z) formant indicatif de destination et disposée en tête et qui contient des indications concernant respectivement des liaisons partielles (V_T) devant être acheminées, et comportant un indicatif de fin (E), positionné à la fin du segment d'information et signalant cette fin, par l'intermédiaire d'une liaison partielle réelle établie respectivement pour un bloc actuel considéré entre deux centraux, que les 16 octets d'un segment d'informations actuel ne pouvant pas être transmis instantanément sont mémorisés temporairement, que dès qu'une ligne est disponible, ces octets mémorisés temporairement sont transmis et qu'à la suite de la transmission des 16 octets mémorisés temporairement au préalable, le reste actuel du segment d'informations est ajouté et transmis d'une manière correcte dans le temps conformément à la trame temporelle, et que la liaison virtuelle (V_V) est supprimée à la fin de la transmission d'informations.

4. Réseau numérique universel suivant la revendication 1, 2 ou 3, caractérisé par le fait que pour l'établissement de la liaison virtuelle (V_V), il se produit tout d'abord, sur la base d'une partie, déterminant le central de destination (VSt_B), de l'information de sélection (W), à savoir d'un indicatif (KVSt_B) du central de destination, une recherche de voies d'acheminement lors de laquelle se trouve sélectionné un faisceau de lignes par l'intermédiaire duquel le central de départ (VSt_A) peut être relié indirectement au central de destination (VSt_B) ou est relié directement à ce dernier et dans lequel il existe une capacité libre de transmission d'informations à l'instant du début de la recherche des voies d'acheminement, que le central de départ (VSt_A) envoie, par l'intermédiaire d'une ligne libre du faisceau de lignes sélectionné, qui aboutit à un central de transit (VSt_{D1}) ou au central de destination (VSt_B), une suite (D') de données et d'établissement de liaison à ce central de transit (VSt_{D1}) ou au central de destination (VSt_B), la suite (D') de données d'établissement de liaison contenant l'information de sélection (W) sous la forme de l'indicatif (KVSt_B) du central de destination et d'un indicatif (KB) de l'appareil terminal de destination ainsi qu'une information d'identification (I) sous la forme d'un indicatif (KVSt_A) du central de départ et d'un indicatif (KA) de l'appareil terminal de départ ainsi qu'un indicatif (A-D$_1$) de faisceau de lignes concernant le faisceau de lignes sélectionné, que dans le cas où le faisceau de lignes sélectionné n'aboutit pas directement au central de destination (VSt$_B$), mais au central de transit (VSt$_{D1}$), ce dernier exécute, sur la base de l'indicatif (KVSt$_B$) du central de destination présente à l'intérieur de l'information de sélection (W), une recherche de voies d'acheminement lors de laquelle se trouve sélectionné un autre faisceau de lignes, par l'intermédiaire duquel le premier central de transit (VSt$_{D1}$) peut être relié indirectement par l'intermédiaire d'un autre central de transit (VSt$_{D2}$) au central de destination (VSt$_B$) ou est relié directement à ce dernier et dans lequel il existe une capacité libre de transmission d'informations à l'instant du début de cette recherche de voies d'acheminement, que le premier central de transit (VSt$_{D1}$) envoie, par l'intermédiraire d'une ligne libre du faisceau de lignes sélectionné, qui aboutit à l'autre central de transit (VSt$_{D2}$) ou au central de destination (VSt$_B$), une autre suite (D'') de données d'établissement de liaison au second central de transit (VSt$_{D2}$) ou au central de destination (VSt$_B$), la suite (D'') de données d'établissement de liaison contenant l'information de sélection (W) sous la forme de l'indicatif (KVSt$_B$) du central de destination et de l'indicatif (KB) de l'appareil terminal de destination ainsi que l'information d'identification (I) sous la forme de l'indicatif (KVSt$_A$) du central de départ et de l'indicatif (KA) de l'appareil terminal de départ ainsi que le premier indicatif de faisceau de lignes (A-D$_1$) et un autre indicatif de faisceau de lignes (D$_1$-D$_2$) ou (D$_1$-VSt$_B$), que respectivement lors de la traversée d'un autre central de transit (VSt$_{D3}$ ... VSt$_{Dn}$), une autre recherche de voies d'acheminement est exécutée et l'indicatif de faisceau de lignes concernant le faisceau de lignes sélectionné est ajouté à la suite déjà existante de données d'établissement de liaison, que le central de destination (VSt$_B$) mémorise la suite (par exemple D'') de données d'établissement de liaison, qui est dirigée en direction de ce central et qui est émise par le central de transit (par exemple VSt$_{D2}$), situé en amont du central de destination dans la voie d'acheminement de la liaison, ou bien directement par le central de départ (VSt$_A$) et renvoie un télégramme d'accusé de réception, qui contient l'ensemble de l'information de la suite (par exemple D'') de données d'établissement de liaison apparue jusqu'à ce que le central de destination (VSt$_B$) soit atteint, par l'intermédiaire de tous les centraux de transit (VSt$_{D1}$ ... VSt$_{Dn}$) au central de départ (VSt$_A$), cette information est également mémorisée, et que les liaisons partielles réelles sont respectivement interrompues après que la suite respectivement émise (par exemple D'') de données d'établissement de liaison ou le télégramme d'accusé de réception ait été préalablement mémorisé dans chaque central de transit (VSt$_{D1}$, VSt$_{D2}$) concerné.

5. Réseau numérique universel suivant l'une des revendications 1 à 4, caractérisé par le fait que l'information devant être transmise (INF) est constituée pra des données en temps réel et qu'aussi bien l'appareil terminal de départ (A) que l'appareil terminal de destination (B) est par exemple un dispositif effectuant une mesure ou un calculateur de processus.

6. Réseau numérique universel suivant l'une des revendications 1 à 4, caractérisé par le fait que l'information à transmettre (INF) est une information de parole (S) mise sous forme numérique, que les sections d'informations sont des phrases, par exemple des éléments de conversation (P) adaptés au flux de la parole, et que l'appareil terminal de départ (A) ou l'appareil terminal de destination (B) est un poste téléphonique.

7. Réseau numérique universel suivant la revendication 6, caractérisé par le fait que, du côté émission, il est prévu un détecteur de parole associé de façon permanente ou en cas de besoin à la ligne constituant une partie de la liaison téléphonique concernée, en un emplacement approprié, par exemple dans un premier étage de sélection de groupe, le central de départ (VSt$_A$) ou le central de destination (VSt$_B$), et qui est à même d'identifier des pauses de conversation et de former alors les phrases (P), que du côté réception il est prévu un dispositif associé de façon permanente ou en cas de besoin à la ligne formant une partie de la liaison téléphonique concernée, en un emplacement approprié, par exemple dans un étage de sélection de lignes, le central de destination (VSt$_B$) ou le central de départ (VSt$_A$), et qui est à même d'envoyer, lors de l'apparition du critère pour la »pause de conversation«, un signal de pause à l'abonné écoutant.

8. Réseau numérique universel suivant la revendication 7, caractérisé par le fait qu'après l'identification de l'indicatif de fin (E) d'une section d'informations, la ligne réelle située entre les centraux concernés est soit disponible pour une autre liaison virtuelle, éventuellement pour cette même liaison virtuelle (V$_V$), soit libre, et que dans ce dernier cas, les octets servant à caractériser l'état de repos sont envoyés dans la ligne par le central respectivement émetteur.

9. Réseau numérique universel suivant la revendication 8, caractérisé par le fait que les octets servant à caractériser l'état de repos possèdent la même forme que l'indicatif de fin (E).

10. Réseau universel suivant la revendication 7, caractérisé par le fait que le signal de conversation codé constituant une phrase (P) est mémorisé temporairement, uniquement dans le central qui est le plus rapproché de l'abonné émettant, à savoir soit dans le central de départ (VSt$_A$) soit, pour une transmission de conversation dans le sens opposé, dans le central de destination (VSt$_B$), pendant un intervalle de temps prédéterminé de mémorisation temporaire de par exemple 15 ms, pendant lequel est émise la suite (Z) formant indicatif de destination et devant être placée en tête de la phrase (P) devant être émise.

11. Réseau numérique universel suivant la revendication 10, caractérisé par le fait que le temps de mémorisation temporaire est choisi suffisamment long pour qu'il apparaisse un temps mort pendant lequel il existe une possibilité de différenciation entre la parole d'une part et des bruits de grésillements d'autre part.

12. Réseau numérique universel suivant l'une des revendications précédentes, caractérisé par le fait que pour une section d'informations possédant un nombre d'octets dépassant la moyenne, il est prévu dans la suite (Z) formant indicatif de destination une indication de priorité sur la base de laquelle une section d'informations caractérisée de cette façon est prise en compte de façon préférentielle lors de l'établissement actuel d'une liaison réelle.

13. Réseau numérique universel suivant la revendication 1, 2 ou 3, caractérisé par le fait qu'il est prévu un caractère de début de destination et qu'il est prévu au début du caractère de début des destination une information concernant la longueur de la suite (Z) formant indicatif de destination.

14. Réseau numérique universel suivant la revendication 1, 2 ou 3, caractérisé par le fait qu'un indicatif de service est contenu dans la suite (Z) formant indicatif de destination.

15. Réseau numérique universel suivant la revendication 14, caractérisé par le fait que l'indicatif de service contient une indication sur le fait que la suite binaire pour la section d'informations concernée est codée du côté émission et qu'une indication concernant le type de codage est contenue dans l'indicatif de service.

16. Réseau numérique universel suivant la revendication 4, caractérisé par le fait que les suites (D', D") de données d'établissement de liaison sont mémorisées avec un bit de sécurité, par exemple un bit de parité.

17. Réseau numérique universel suivant la revendication 13, caractérisé par le fait que l'indication, qui est contenue dans le caractère de début de destination et qui concerne le nombre des octets contenus dans la suite (Z) formant indicatif de destination, est réduite de 1 respectivement après l'utilisation et l'annulation ultérieure d'un octet.

18. Réseau numérique universel suivant la revendication 4, caractérisé par le fait que chaque faisceau de lignes est désigné respectivement localement de façon indépendante dans la suite (D', D") de données d'établissement de liaison, et que l'indicatif concerné (par exemple A-D$_1$) de faisceau de lignes est désigné par de préférence 1 octet.

19. Réseau numérique universel suivant l'une des revendications 9 ou 12 à 18, caractérisé par le fait que dans le cas où il faut transmettre une information de données, une information de texte, une information de fac-similés et/ou une information d'image, un critère de commutation ayant pour signification »commutation sur la transmission de données« est retransmis par l'appareil terminal concerné (A ou B) au central terminal respectif (VSt$_A$ ou VSt$_B$) et qu'alors des octets, se présentant par exemple avec la forme 11111111 peuvent être transmis en un nombre quelconque dans la ligne respectivement considéré entre l'appareil terminal (A ou B) et le central terminal (VSt$_A$ ou VSt$_B$) avant la première trame HDLC (High-Data-Link-Control) et après la dernière trame HDLC et éventuellement également entre les trames HDLC de l'information de données, de textes de fac-similés et/ou d'images devant être transmises, que dans le cas où des paroles doivent ensuite être transmises, un critère de commutation ayant la signification »commutation sur la transmission de la parole« est retransmis depuis l'appareil terminal considéré (A ou B) au central terminal respectif (VSt$_A$ ou VSt$_B$), et qu'ensuite des octets se présentant par exemple sous la forme 00000000 peuvent être transmis dans la ligne respectivement considérée entre l'appareil terminal (A ou B) et le central terminal (VSt$_A$ ou VSt$_B$) avant la première phrase de conversation, après la dernière phrase de conversation et entre les phrases de conversation.

20. Réseau numérique universel suivant la revendication 19, caractérisé par le fait que les critères de commutation sont dérivés de l'indicatif de service.

21. Réseau numérique universel suivant la revendication 20, caractérisé par le fait que les abonné concernés établissent point-à-point une section nécessaire de transmission de données, conformément au procédé HDLC connu en soi et que les adresses HDLC convenueset utilisées entre de tels abonnés HDLC ne sont prises en compte ni par le central terminal considéré (par exemple VSt$_A$), ni par les centraux de transit (VSt$_{D1}$ ... VSt$_{Dn}$) participant éventuellement à la liaison.

22. Réseau numérique universel suivant la revendication 19 ou 20, caractérisé par le fait que dans le cas où un abonné requiert simultanément l'établissement de plusieurs liaisons vers différents abbonnés, il sélectionne une borne particulière »commutation de paquets« au lieu de l'abonné qu'il désire obtenir, et retransmet à cette borne, en tant qu'information utile, les identifications de tous les abonnés désirés, qu'il est prévu un nombre suffisant d'accès au réseau pour la borne »commutation de paquets« et que la borne »commutation de paquets« établit une liaison individuelle de transmission de données avec chacun des abonnés désirés.

# FIG 1

VR VR VR

A
(KA)

VSt$_A$
(KVSt$_A$)

VT
(A-D1)

VSt$_{D1}$

VT
(D1-D2)

VSt$_{Dn}$

VT
(Dn-B)

VSt$_B$
(KVSt$_B$)

B
(KB)

VV

# FIG 2

D'

I

W

| A - D1 | | | | |

KA   KVSt$_A$   KB   KVSt$_B$

# FIG 3

D''

I

W

| D1 - D2 | A - D1 | | | | |

KA   KVSt$_A$   KB   KVSt$_B$

# FIG 4

S

Z   E   P   Z   E

(E)   (E)